# EUROPÄISCHE PATENTANMELDUNG

(11) **EP 0 996 132 A1**
(43) Veröffentlichungstag der Anmeldung: **26.04.2000**
(21) Anmeldenummer: 98890305.0
(22) Anmeldetag: 16.10.1998
(51) Int. Cl.: H01B 3/04, H02K 3/30

(54) **Verfahren zur Herstellung von imprägnierbaren Feinglimmerbändern mit eingebautem Beschleuniger**

(71) Anmelder: ISOVOLTA Österreichische Isolierstoffwerke Aktiengesellschaft, 2355 Wiener Neudorf (AT)
(72) Erfinder: Gsellmann, Helmut, Mag. Dr., 8010 Graz (AT)
(74) Vertreter: Dungler, Karin

(57) **Zusammenfassung**

Es wird ein Verfahren zur Herstellung von imprägnierbaren Feinglimmerbändern mit eingebautem Beschleuniger, die nach dem Aufwickeln auf die Leiter der Wicklungen von elektrischen Maschinen, mit einem lösungsmittelfreien Imprägnierharz getränkt und danach unter Wärmeeinwirkung ausgehärtet werden, angegeben. Dabei wird eine Feinglimmerfolie mit einem Härter-hältigen Pulverlack-Harzsystem bestreut und die mit dem Pulverlack bestreute Seite der Feinglimmerfolie mit einem Trägermaterial verklebt, wobei beim Verkleben unter Temperatureinfluß das Pulverlack-Harzsystem aushärtet.

Das derart hergestellte Feinglimmerband ist insbesondere für die Bereitstellung dicker Isolationswandstärken, wie sie bei Hochspannungsmaschinen notwendig sind, geeignet.

## Beschreibung

Die Erfindung betrifft ein Verfahren zur Herstellung von imprägnierbaren Feinglimmerbändern mit eingebautem Beschleuniger, die nach dem Aufwickeln auf die Leiter der Wicklungen von elektrischen Maschinen, mit einem lösungsmittelfreien Imprägnierharz getränkt und danach unter Wärmeeinwirkung ausgehärtet werden, wobei eine Feinglimmerfolie mit einem Pulverlack-Harzsystem bestreut, und die mit dem Pulverlack bestreute Seite der Feinglimmerfolie unter dem Einfluß von Druck und Wärme mit einem Trägermaterial verklebt wird.

Zur Isolierung von Wicklungselementen wie beispielsweise Leiterstäben in rotierenden elektrischen Hochspannungsmaschinen hat sich in den letzten Jahren die Tränktechnik auf Basis einer Vakuum-Druckimprägnierung stark durchgesetzt. Dabei werden die Wicklungselemente aus konstruktionstechnischen Gründen entweder als Formspulen oder Leiterstäbe, vorzugsweise Röbelstäbe, ausgebildet. Diese Wicklungselemente werden mit einer glimmerhältigen Hauptisolation versehen und im Vakuum-Druckimprägnierverfahren weiterbehandelt. Dabei werden als Imprägnierharze Epoxidharze, vorzugsweise niedrigviskose lösungsmittelfreie Harzsysteme, eingesetzt.

Diese durchtränken nun die aus mehreren Wicklungslagen gebildete, glimmerhältige Hauptisolation, sodaß Hohlräume, welche zwischen den Wicklungslagen Teilentladungen hervorrufen können, vollständig ausgefüllt werden.

Die Wicklungslagen der Hauptisolation werden durch glimmerhältige Isolierbänder ausgebildet. Diese bestehen aus einer Feinglimmerfolie, welche mittels eines pulverförmigen Klebeharzes mit einem Trägermaterial verklebt ist. Das Trägermaterial soll porös sein, damit die lösungsmittelfreien Imprägnierharze dieses durchtränken können. Um die Vernetzungsreaktion des Imprägnierharzes während des Aushärtungsprozesses zu beschleunigen, werden die eingesetzten Feinglimmerfolien zusätzlich mit Beschleuniger imprägniert.

Als Pulverlack-Harzsystem werden vorzugsweise härterfreie Harzsysteme eingesetzt, da man gefunden hat, daß Zusätze in Form einer Härterkomponente Fremdkörper im Glimmerband darstellen und daß dadurch die angegestrebte, vollständige Löslichkeit des Pulverharzes im Imprägnierharz nicht mehr gewährleistet ist. Diese Fremdkörper reduzieren in der Folge die Imprägnierbarkeit des Isolierbandes während der Tränkphase.

Dennoch gelingt es mit diesen beschleunigerhältigen Isolierbändern unter Anwendung von härterfreien Pulverlack-Harzsystemen Isolationswandstärken bis ca. 4mm vollständig und in relativ kurzer Imprägnierzeit zu durchtränken.

Es hat sich jedoch gezeigt, daß mit zunehmender Größe und Leistung von Generatoren relativ dicke Isolationswandstärken notwendig werden, welche ebenso gänzlich mit lösungsmittelfreiem Imprägnierharz während der Tränkphase durchtränkt werden sollen.

Beim Einsatz des vorgenannten beschleunigerhältigen Glimmerbandes, welches ein härterfreies Pulverlack-Harzsystem aufweist, hat es sich jedoch gezeigt, daß bei dicken Isolationswandstärken von über 4 mm diese nicht mehr vollständig mit Imprägnierharz durchtränkt werden. Die nicht durchtränkten Wicklungslagen sind Fehlstellen im Isolationssystem und bilden daher die Ursache für einen eventuellen Kurzschluss.

Der Erfindung liegt daher die Aufgabe zugrunde, die aus dem Stande der Technik vorbekannten Nachteile dieser Beschleunigerhältigen Glimmerbänder auszuschließen. Erfindungsgemäß wird in das eingangs genannte Verfahren zur Herstellung von imprägnierbaren Feinglimmerbändern mit eingebautem Beschleuniger ein Härter-hältiges Pulverlack-Harzsystem eingesetzt, welches beim Verkleben der Feinlimmerfolie mit dem Trägermaterial bei erhöhter Temperatur aushärtet.

Überraschenderweise wurde dabei gefunden, daß durch den Einsatz eines Härter-hältigen Pulverlack-Harzsystems als Klebeharz bei Beschleuniger-hältigen Glimmerbändern ebenso auch dicke Isolationswandstärken gänzlich durchimprägniert werden können.

Dieser technische Effekt wird dadurch erzielt, daß bei der Verklebung des Trägermaterials mit der Feinglimmerfolie das Härterhältige Pulverlack-Harzsystem vernetzt und eine punktförmige, im Imprägnierharz unlösliche Verklebung darstellt. Da die punktförmige Verklebung nur einen geringen Prozentsatz der imprägnierbaren Oberfläche des Trägermaterials benetzt, kann der übrige, unbenetzte Oberflächenbereich leicht durchtränkt werden. Außerdem wird durch den Härter eine, mitunter unerwünscht rasche Reaktion, wie es bei Härter-freien, im Imprägnierharz bei etwa 60°C löslichen Harzsystemen der Fall ist, zwischen Pulverlack-Harz und Imprägnierharz während der Tränkphase vermieden, sodaß auch dicke Isolationswandstärken gänzlich mit Imrägnierharz durchtränkt werden.

Erfindungsgemäß wird ferner vorgeschlagen, daß das eingesetzte Härter-hältige Pulverlack-Harzsystem ein Bisphenol-A-Epoxyharz sowie ein Phenolnovolak-Epoxidharz aufweist und daß der eingesetzte Härter ein aminischer Härter, vorzugsweise ein primäres und/oder sekundäres aliphatisches Amin, ist.

Weitere Vorteile des erfindungsgemäßen Verfahren bestehen darin, daß das eingesetzte Trägermaterial ein Glasgewebe, ein Vlies oder eine Kunststofffolie ist und daß die eingesetzte Feinglimmerfolie mit einem Beschleuniger, vorzugsweise Zinknaphthenat, vorimprägniert wird.

Die Erfindung wird nun anhand eines Beispiels näher erläutert.

Eine Feinglimmerfolie aus unkalziniertem Muskovit mit einem Flächengewicht von 160 g/m² wird mit einer Lösung von Zinknaphthenat in Methylethylketon imprägniert. Durch Abdampfen des Lösungsmittels wird die Feinglimmerfolie vorimprägniert und anschließend mit einem Härter-hältigen Pulverlack-Harzsystem auf Basis einer Epoxidharzmischung bestreut. Beispielsweise besteht diese aus einem Phenolnovolak-Epoxidharz und einem Bisphenol-A-Epoxidharz. Als Härter wird ein fester aminischer Härter eingesetzt. Besonders geeignet sind Härter auf Basis von primären und/oder aliphatischen Aminen. Der Erweichungspunkt des Härterhältigen Pulverlackharzsystems liegt etwa um 85°C.

Anschließend wird die mit dem Härter-hältigen Pulverlack-Harzsystem bestreute Feinglimmerfolie in einen beheizbaren Kalander übergeführt, sodaß das Pulverlack-Harz aufgeschmolzen und mit dem über eine Rolle zugeführten Trägermaterial verklebt wird.

Als Trägermaterial wird
a) ein Glasgewebe mit einem Flächengewicht von 23 g/m² eingesetzt, das mit 2 g/m² eines flexibel vernetzenden Acrylharzes beschichtet ist. Um dieses aushärten zu können, wird das Glasgewebe anschließend bei einer Temperatur von 100°C getempert,
b) oder es wird Trägermaterial ein Glasgewebe mit einem Flächengewicht von 23 g/m², das mit 0,5 g/m² Zinknaphthenat beschichtet ist, oder
c) ein Polyestervlies mit einem Flächengewicht von 20 g/m² oder
d) eine Polyesterfolie mit einem Flächengewicht von 42 g/m² eingesetzt.

Der Vorteil eines Härter-hältigen Pulverlackharzsystems läßt sich anhand der Anzahl von durchimprägnierten Lagen während der Vakuum-Druckimprägnierung im Vergleich mit bekannten härterfreien Pulverlackharzsystemen und daraus hergestellten Isolierbändern sehr gut darstellen.

Zu diesem Zweck werden Leiterstäbe mit jeweils 20 Lagen am Isolierband halbüberlappt bewickelt, die Stirnseiten der Isolation mit Harz vergossen und die so hergestellten Leiterstäbe mit einem lösungsmittelfreien Epoxy-Säureanhydrid-Imprägnierharz bei 60°C 3 Stunden imprägniert. Nach dem Aushärten werden die Leiterstäbe quer geschnitten, um die Imprägniertiefe zu messen.

Das im folgenden Diagramm dargestellte Ergebnis wird anhand eines Musters A, welches ein unter Verwendung eines Härterhältigen Pulverlack-Harzsystems gemäß Beispielvariante A hergestelltes Isolierband im Vergleich mit einem bekannten glimmerhältigen Isolierband (Muster B), welches jedoch einen härterfreien Pulverlack enthält, welcher in einem Epoxy-Säureanhydrid-Imprägnierharz bei etwa 60°C löslich ist, verglichen.

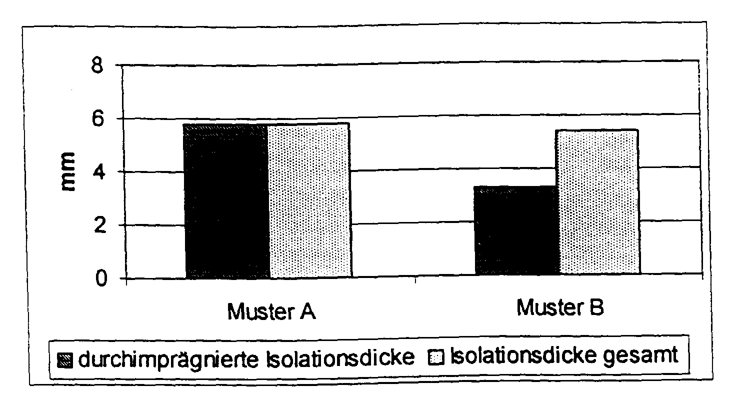

Aus dem Diagramm ist zu ersehen, daß das Muster A, welches ein Glimmerband mit einem Härter-hältigen Pulverharz ist, im gesamten Wicklungsquerschnitt durchimprägniert ist. Das Muster B hingegen, welches ein Glimmerband darstellt, das mit einem härterfreien Pulverlack hergestellt wurde, zeigt eine nur teilweise Durchimprägnierung der Lagen, nämlich lediglich bis zu etwa zwei Drittel. Die Ursache für diese unzureichende Durchimprägnierung liegt darin, daß die Vernetzungsreaktion zwischen Pulverlack-Harz und lösungsmittelfreiem Imprägnierharz durch die Maßgabe eines härterfreien Pulverlack-Harzes in Verbindung mit einem Beschleuniger derart rasch abläuft, daß es zu einem unerwünschten Viskositätsanstieg des Imprägnierharzes und schließlich zum gänzlichen Stillstand des Imprägnierschrittes kommt.

Beim erfindungsgemäßen Fall nach Muster A hingegen ist die Beschleunigerkomponente durch den Einsatz eines Härters im Pulverlack-Harzsystem in bevorzugter Weise derart blockiert, daß die Durchtränkung sämtlicher Lagen bewirkt wird.

Dieser unerwünschte Viskositätsanstieg in der Tränkphase wird anhand von Untersuchungen an verschiedenen Harzsystemen in einem Rheometer erläutert und graphisch dargestellt:

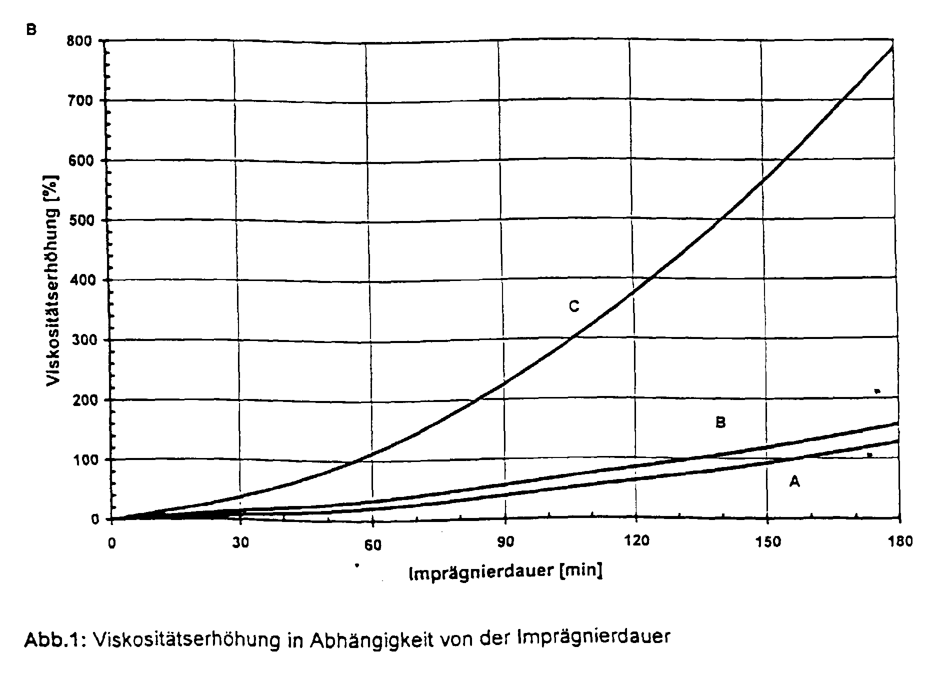

Es wurden als Referenzsysteme
- ein Bisphenol A/Säureanhydridharz, das nur mit Zinknaphthenat beschleunigt ist (Kurve A),
- ein Bisphenol A/Säureanhydridimprägnierharz, Zinknaphthenat und ein Härter-hältiges Pulverlack-Harzsystem (Kurve B) gemäß der Erfindung und
- ein Bisphenol A/Säureanhydridimprägnierharz, Zinknaphthenat und ein härterfreies Pulverlack-Harzsystem (Kurve C) nach dem Stand der Technik im Verhältnis ihrer Gewichtsanteile in einer vollständig durchtränkten Isolation zusammengemischt und mit einem Rheometer der Viskositätsverlauf bei 60°C über die Zeit gemessen.

Kurve A gibt den Verlauf einer Imprägnierung eines Beschleuniger-hältigen Feinglimmerbandes wieder, wie er ohne Vorhandensein störender Zusatzstoffe (reaktive Klebesysteme) im Band ablaufen würde.

Trotz Zugabe des Härter-hältigen Pulverlack-Harzystems zeigt das erfindungsgemäße Referenzsystem gemäß Kurve B nur einen geringen Viskositätsanstieg im Verhältnis zu Kurve A.

Das Referenzsystem nach dem Stande der Technik gemäß Kurve C hingegen zeigt schon nach kurzer Zeit einen derart hohen Viskositätsanstieg, daß dieser zwangsläufig zum Stillstand des Tränkschrittes führen muß.

Anhand der Vergleichsbeispiele unter Verwendung der vorgenannten graphischen Darstellungen konnte gezeigt werden, daß sich das nach dem erfindungsgemäßen Verfahren hergestellte Feinglimmerband insbesondere für die Bereitstellung dicker Isolationswandstärken, wie sie bei Hochspannungsmaschinen notwendig sind, geeignet ist, da es in Verbindung mit den eingsetzten Imprägnierharzen in zufriedenstellenender Weise durchtränkt wird und daher Fehlstellen im Isolationsystem vermieden werden können.

## Patentansprüche

1. Verfahren zur Herstellung von imprägnierbaren Feinglimmerbändern mit eingebautem Beschleuniger, die nach dem Aufwickeln auf die Leiter der Wicklungen von elektrischen Maschinen, mit einem lösungsmittelfreien Imprägnierharz getränkt und danach unter Wärmeeinwirkung ausgehärtet werden, wobei eine Feinglimmerfolie mit einem Pulverlack-Harzsystem, bestreut, und die mit dem Pulverlack bestreute Seite der Feinglimmerfolie mit einem Trägermaterial unter dem Einfluß von Druck und Wärme verklebt wird, dadurch gekennzeichnet, daß das eingesetzte Pulverlack-Harzsystem einen Härter enthält und beim Verkleben der Feinglimmerfolie mit dem Trägermaterial bei erhöhter Temperatur aushärtet.

2. Verfahren nach Anspruch 1, dadurch gekennzeichnet, daß das eingesetzte härterhältige Pulverlack-Harzsystem eine Mischung aus einem Bisphenol-A-Epoxyharz sowie einem Phenolnovolak-Epoxyharz ist.

3. Verfahren nach Anspruch 1 oder 2, dadurch gekennzeichnet, daß der im Pulverlack-Harzsystem eingesetzte Härter ein aminischer Härter, vorzugsweise ein primäres und/oder sekundäres aliphatisches Amin, ist.

4. Verfahren nach einem der Ansprüche 1 bis 3, dadurch gekennzeichnet, daß das eingesetzte Trägermaterial ein Glasgewebe, ein Vlies oder eine Kunststofffolie ist.

5. Verfahren nach einem der Ansprüche 1 bis 4, dadurch gekennzeichnet, daß die eingesetzte Feinglimmerfolie mit einem Beschleuniger, vorzugsweise Zinknaphthenat, vorimprägniert wird.
